# EUROPEAN PATENT APPLICATION

(11) **EP 2 482 594 A2**
(43) Date of publication of application: **01.08.2012**
(21) Application number: 12153141.2
(22) Date of filing: 30.01.2012
(51) Int. Cl.: H04W 52/02, H04B 1/16

(54) **MOBILE DEVICE AND METHOD FOR EXTENDING BATTERY LIFE**

(30) Priority: 31.01.2011 US 201113018033
(71) Applicant: Hand Held Products, Inc., Skaneateles Falls, New York 13153 (US)
(72) Inventor: Sauerwein, Jr., James Timothy, Morristown, NJ New Jersey 07962-2245 (US); Hinson, Douglas, Morristown, NJ New Jersey 07962-2245 (US); Wang, Ynjiun Paul, Morristown, NJ New Jersey 07962-2245 (US)
(74) Representative: Buckley, Guy Julian

(57) **Abstract**

A mobile electronic device includes a microprocessor, a wireless transceiver, a power supply manager, and a controller coupled to a system bus. The power supply manager is configured to operate the mobile device for a predetermined discharge time, and is coupled to a battery for supplying primary power to the mobile electronic device. The power supply manager is also coupled to a fuel cell for supplying auxiliary power. The power supply manager monitors a dynamic capacity discharge rate, which deviates from a baseline capacity discharge rate due to one or more factors. The controller operates the fuel cell responsive to the deviation of the dynamic capacity discharge rate from the baseline capacity discharge rate to restore the predetermined discharge time. In one aspect, the deviation is due to the temperature of the battery.

## Description

### CROSS REFERENCE TO RELATED APPLICATIONS

This application claims priority to U. S. Patent Application No. 13/018,033 filed January 31, 2010 entitled, "Mobile Device and Method for Extending Battery Life." The priority of the above application is claimed and is incorporated herein by reference in its entirety.

### FIELD OF THE INVENTION

This disclosure relates generally to mobile electronic devices and more specifically to an apparatus and method for optimizing power supplies in a mobile device.

### BACKGROUND OF THE INVENTION

Mobile electronic devices are used in a wide variety of applications including handheld devices and wireless transceivers. Wireless transceivers typically enable the devices to communicate wirelessly with other wireless devices and systems. Conventional mobile electronic devices often use batteries to provide the operating power needed by the internal functions of the device, such as wireless transmission and reception, operation of displays, and computing.

Typical battery-powered mobile electronic devices such as wireless transceivers often undertake numerous radio frequency (RF) related activities, such as transmission, reception, and processing of RF signals. While RF transmission tasks may consume power and require a higher current draw from a battery, RF reception and other tasks (such as operation in idle mode or sleep mode) may require lower current. However, the continual current draw of these non-transmission tasks may still consume a lot of battery power, thereby decreasing the battery's life.

An adequate energy supply is often a crucial design aspect in the development of portable electronic devices used in devices such as mobile telephones and wireless sensors. In addition to the power demands presented by conventional tasks, increasing the functionality of a device (such as by providing faster Internet access or more complex gaming features) or incorporating advanced components into the device (such as an improved video screen or camera) generally increases power consumption. This often leads to even higher demands for increased battery power, thereby adding additional strain on battery life. A common consumer complaint regarding mobile electronic devices is that the battery life is too short, or varies widely between charges.

Several efforts have been made to reduce power consumption and improve battery life of these and other types of devices. These efforts have included optimization of circuit architectures and designing low-current components. However, gains that can be achieved through efficiency are often limited.

Moreover, as the components of a device or the devices in a system change (such as when devices are added to or removed from a system), the power requirements of the device or system may change. The power requirements may also change dynamically when a component or device changes its mode of operation. For example, a cellular telephone device in use in an automobile travelling on a highway may pass a multitude of cellular towers, each with varying strength-of-signal to the device. The dynamic power requirements necessary to prevent a dropped call may vary drastically, which negatively impacts battery life and leads to the observed variance in battery life between charges.

### SUMMARY OF THE INVENTION

In one aspect of the disclosure, a mobile electronic device includes a microprocessor, a wireless transceiver, a power supply manager, and a controller coupled to a system bus. The power supply manager is configured to operate the mobile device for a predetermined discharge time, and is coupled to a battery for supplying primary power to the mobile electronic device. The power supply manager is also coupled to a fuel cell for supplying auxiliary power. The power supply manager monitors a dynamic capacity discharge rate, which deviates from a baseline capacity discharge rate due to one or more factors. The controller operates the fuel cell responsive to the deviation of the dynamic capacity discharge rate from the baseline capacity discharge rate to restore the predetermined discharge time.

In another aspect of the disclosure, a method for achieving a predetermined discharge time for a mobile electronic device is provided. The method includes the steps of providing a battery for supplying primary power to the mobile device, and providing a fuel cell for supplying auxiliary power to the mobile device. The method further includes the step of monitoring a dynamic capacity discharge rate of the mobile electronic device, wherein the dynamic capacity discharge rate is responsive to one or more factors. A forecast discharge time is determined in response to the dynamic capacity discharge rate. The forecast discharge time is compared to the predetermined discharge time and, if the forecast discharge time is less than the predetermined discharge time, power is drawn from the fuel cell until the dynamic capacity discharge rate results in the forecast discharge time being greater than or equal to the predetermined discharge time.

In another aspect of the disclosure, a method for achieving a predetermined discharge time for a mobile electronic device is provided. The method includes the steps of providing a battery for supplying primary power to the mobile device, and a fuel cell for supplying auxiliary power to the mobile device. The method further includes the step of establishing a baseline capacity discharge rate to achieve the predetermined discharge time. A dynamic capacity discharge rate of the mobile electronic device is monitored, wherein the dynamic capacity discharge rate is responsive to one or more factors. The dynamic capacity discharge rate is compared to the baseline capacity discharge rate and, if the dynamic capacity discharge rate differs from the baseline capacity discharge rate, power is drawn from the fuel cell to make up the difference.

### BRIEF DESCRIPTION OF THE DRAWINGS

The features described herein can be better understood with reference to the drawings described below. The drawings are not necessarily to scale, emphasis instead generally being placed upon illustrating the principles of the invention. In the drawings, like numerals are used to indicate like parts throughout the various views.

FIG. 1 is a block diagram of a mobile electronic device according to one embodiment of the present invention;

FIG. 2 is a plot of battery discharge rate in accordance with one embodiment of the present invention;

FIG. 3 is a plot of battery discharge rate in accordance with another embodiment of the present invention;

FIG. 4 is a plot of battery discharge rate in accordance with another embodiment of the present invention; and

FIG. 5 is a plot of battery discharge rate in accordance with yet another embodiment of the present invention.

### DETAILED DESCRIPTION OF THE INVENTION

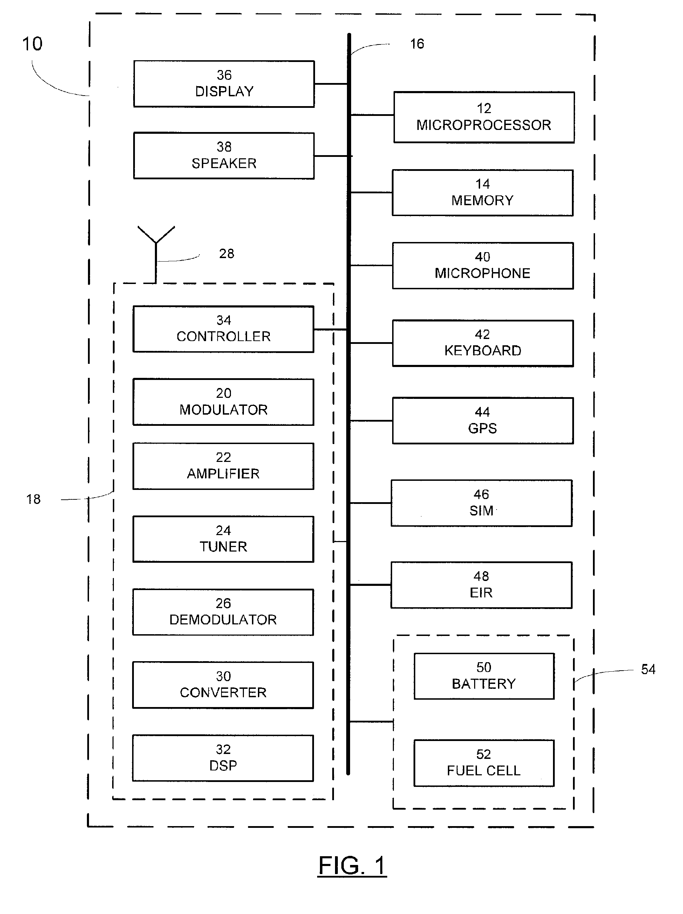

Referring to the simplified block diagram of FIG. 1, a mobile electronic device 10 includes a at least one microprocessor 12 and a memory 14, both coupled to a system bus 16. The microprocessor 12 can be provided by a general purpose microprocessor or by a specialized microprocessor, such as an application-specific integrated circuit (ASIC). In one embodiment, the mobile electronic device 10 can comprise a single microprocessor which can be referred to as a central processing unit (CPU). In another embodiment, the mobile electronic device 10 can comprise two or more microprocessors, for example a CPU and a specialized microprocessor (e.g., an ASIC). In one embodiment, the memory 14 can be provided by random access memory (RAM), read-only memory (ROM), erasable programmable read only memory (EPROM), and/or subscriber identity module (SIM) card-based memory.

The mobile electronic device 10 can further comprise a wireless transceiver 18. The wireless transceiver 18 includes a variety of components that perform various tasks or functions. For example, the components may include a radio frequency (RF) signal modulator 20, an RF signal amplifier 22, an RF signal tuner 24, and an RF signal demodulator 26. The RF signal modulator 20 includes any suitable structure for modulating data onto an outgoing RF signal for transmission. The RF signal amplifier 22 includes any suitable structure for amplifying RF signals. The RF signal tuner 24 includes any suitable structure for tuning the wireless transceiver 18 to a specified RF frequency or frequencies. The RF signal demodulator 26 includes any suitable structure for demodulating data in an incoming RF signal received by the wireless transceiver 18. The transmission and reception of RF signals could occur using an antenna 28, which represents any suitable structure capable of transmitting and receiving RF or other wireless signals.

The components may also include analog-to-digital (A/D) and digital-to-analog (D/A) signal converters 30, a digital signal processor (DSP) 32, and a controller 34. The signal converters 30 include any suitable structure(s) for converting analog signals into digital signals or digital signals into analog signals. The digital signal processor 32 includes any suitable structure for processing signals, such as signals to be provided to the RF signal modulator 20 for transmission or signals received by the RF signal demodulator 26. The controller 34 includes any suitable structure for controlling the overall operation of the wireless transceiver 18, such as a microprocessor or microcontroller, and may further be adapted to the system bus 16 to control the overall operation of the mobile electronic device 10.

In addition, the components include various input/output elements, such as an audio speaker 36, a display adapter 38, a microphone 40, and a keyboard interface 42, also coupled to the system bus 16. The audio speaker 36 includes any suitable structure for recreating audible sounds for a user. The display adapter 38 includes any suitable structure for displaying images (still or video), such as a liquid crystal display. The microphone 40 includes any suitable structure for capturing audio information. The keyboard interface 42 includes any suitable structure for receiving input from a user via buttons, such as physical buttons or a display screen with "soft" buttons. In one embodiment, the mobile electronic device 10 can further comprise a GPS receiver 44. In one embodiment, the mobile electronic device 10 can further comprise at least one connector 46 configured to receive a subscriber identity module (SIM) card.

The mobile electronic device 10 can further comprise one or more encoded information reading (EIR) devices 48, including a bar code reading device, an RFID reading device, and a card reading device, also coupled to the system bus 16. In one embodiment, an EIR reading device can be capable of outputting decoded message data corresponding to an encoded message. In another embodiment, the EIR reading device can output raw message data comprising an encoded message, e.g., raw image data or raw RFID data.

Devices that read bar codes, read RFID, or read cards bearing encoded information may read more than one of these categories. For example, a device that reads bar codes may include a card reader, and/or RFID reader; a device that reads RFID may also be able to read bar codes and/or cards; and a device that reads cards may be able to also read bar codes and/or RFID. For further clarity, it is not necessary that a device's primary function involve any of these functions in order to be considered such a device; for example, a cellular telephone, smartphone, or PDA that is capable of reading bar codes is a device that read bar codes for purposes of the present invention.

The mobile electronic device 10 includes two power sources: a battery 50 to provide primary power and a fuel cell 52 to provide auxiliary power. In this document, the term "battery" broadly refers to any electrochemical device that stores energy and makes it available in an electrical form, such as in the form of direct current (DC). The battery 50 could include one or more cells, such as batteries having a single cell or an interconnected array of multiple cells (like a voltaic pile). The battery 50 may also include one or more battery packs, where multiple identical or similar batteries or battery cells are configured in series, parallel, or a mixture of both. The battery 50 may further include a battery regulator (not shown, a component used to keep the peak voltage of an individual battery or cell below its maximum value so as to allow weaker batteries to be fully charged, bringing the whole pack back into balance) and/or a battery balancer (not shown, a device that can shuttle energy from strong cells to weaker ones in real-time for even better balance). In one example, the battery 50 is a lithium ion cell.

In one example, battery 50 is a Galvanic cell. The phrase "Galvanic cell" refers to an electro-chemical energy storage device having two metals connected by an electrolyte, which forms a salt bridge between the metals. Any suitable type of Galvanic cell may be used in the mobile electronic device 10. For example, Galvanic cells can include wet cells, gel cells, and dry cells. Galvanic cells may also represent primary Galvanic cells or secondary Galvanic cells. Primary Galvanic cells (also referred to as "disposable" batteries) are generally intended to be used once until the chemical changes that induce the electrical current supply are complete, at which point the battery is typically discarded. Primary Galvanic cells can include zinc-carbon batteries, zinc-chloride batteries, alkaline/manganese batteries, silver-oxide batteries, lithium batteries, mercury batteries, and zinc-air batteries. Secondary Galvanic cells (also referred to as "rechargeable" batteries) are **characterized in that** they can be readily re-charged after being drained of electrical potential. Recharging is typically performed by applying an externally supplied electrical current, which causes the electrochemical reactions that occur during use to be reversed. Secondary Galvanic cells can include lithium ion batteries, lithium ion polymer batteries, sodium sulfur (NaS) batteries, nickel metal hydride batteries, nickel-cadmium batteries, sodium-metal chloride batteries, and nickel-zinc batteries. In the disclosed embodiment, the battery 50 is a rechargeable lithium ion Galvanic cell.

The term "fuel cell" refers to an energy storage device in which the energy of an electrochemical reaction between a fuel (such as hydrogen or methanol) and an oxidant (such as oxygen) is converted directly and continuously into electrical energy. The fuel cell 52 may have a central electrolyte disposed between two electrodes. These electrodes often contain a catalyst, such as a metal, to increase the rate of the electrochemical reaction. The type of metal used for a catalyst may depend on the type of fuel that the cell uses. While the electrodes within a Galvanic cell may react and change as the cell is charged or discharged, the fuel cell's electrodes may be catalytic and relatively stable. This may allow the fuel cell 52 to provide auxiliary power in an assured, predictable manner under many operating conditions.

Any suitable type of fuel cell 52 may be used in the mobile electronic device 10. For example, a micro fuel cell could be adapted for use in a mobile telephone. In the disclosed embodiment, one or more fuel cells 52 in the electronic device 10 are a polymer electrolyte membrane (PEM) fuel cell. In other embodiments, the fuel cell 52 is a direct methanol fuel cell. In yet another embodiment, the fuel cell 52 is an alkaline fuel cell.

PEM fuel cells (also known as proton exchange membrane fuel cells) may utilize thin polymer sheets as an electrolyte. The polymer sheets can be coated with a thin layer of platinum or other catalyst to increase the rate of the electrochemical reaction, and the electrodes can be made of porous carbon. PEM fuel cells may generally have an efficiency of about 40 to 50 percent and may be well suited for the mobile electronic device 10. For example, they may operate at relatively low temperatures (e.g., 80° C), and therefore not require parasitic power-consuming fans and the like for cooling. PEM fuel cells can be designed in different sizes depending upon the amount of voltage required, may have very little warm-up time, and can respond immediately to increased demand for power. Moreover, PEM fuel cells are often easy to seal, handle, and assemble.

Direct methanol fuel cells also use a polymer electrolyte membrane. However, these fuel cells use a methanol solution (such as about 25 percent methanol in water), rather than pure hydrogen as fuel. The electrolyte's catalyst (such as platinum) may pull the hydrogen directly from the methanol. The hydrogen's proton (or positive ion) and electron are then separated. The electron travels around the outside of the membrane to produce a flow of current, while the proton travels across the membrane electrolyte to the cathode where it retrieves an electron that has completed its path around the membrane. The proton and electron combine and react with oxygen to form water. Direct methanol fuel cells may be approximately 40 percent efficient at an operating temperature of about 50° C to about 65° C. Relative to other fuel cells, this efficiency may be low. Because direct methanol fuel cells operate directly with liquid methanol and at relatively low temperatures, though, they may work well for the mobile electronic device 10.

Alkaline fuel cells typically use a concentrated solution of potassium hydroxide (KOH) in water as an electrolyte. Hydroxyl ions (OH--) migrate from the cathode to the anode in these fuel cells. Hydrogen gas supplied to the anode reacts with the OH-- ions to produce water, and this reaction releases electrons that provide electrical power. Alkaline fuel cells may have an efficiency of 60 percent and can operate at low temperatures, ranging from about 25° C to about 70° C. Alkaline fuel cells may also start quickly, and they may have low power density output.

The mobile electronic device 10 may further include a power supply manager 54. The power supply manager 54 can be used to extend the discharge time of the battery 50, for example by regulating the usage of the battery and the fuel cell 52 responsive to determining the remaining charge in the battery. The power supply manager 54 may include consumption rate sensors, power level sensors, a power availability calculator, and a power requirements calculator (all not shown). The consumption rate sensors may sense the consumption of power from the battery 50 and/or fuel cell 52, and may take any suitable form now known or developed in the future, may be hardwired or wireless, and may be battery-operated or line powered. The power availability calculator receives information from the power level sensors, consumption rate sensors, and memory 14 and estimates the available power for the battery 50 and/or fuel cell 52. The power availability calculator includes any hardware, software, firmware, or combination thereof for calculating the available power from at least one power supply. The power requirements calculator estimates the power requirements of the various loads on the mobile electronic device 10, such as the display adapter 38 and the wireless transceiver 18.

The power requirements calculator may generate current load activity information, including the measurement of the actual current load consumption characteristics for different statuses of the loads (e.g., active, idle, and sleeping states). The power requirements of these different statuses may be provided by a map or table stored memory 14. The power requirements calculator may utilize information from the map or table and calculate the power needs of the various loads. This information may be provided to the controller 34, which in concert with the power availability calculator may determine a dynamic capacity discharge rate 56 and a forecast discharge time 58 for the battery, as will explained in detail below.

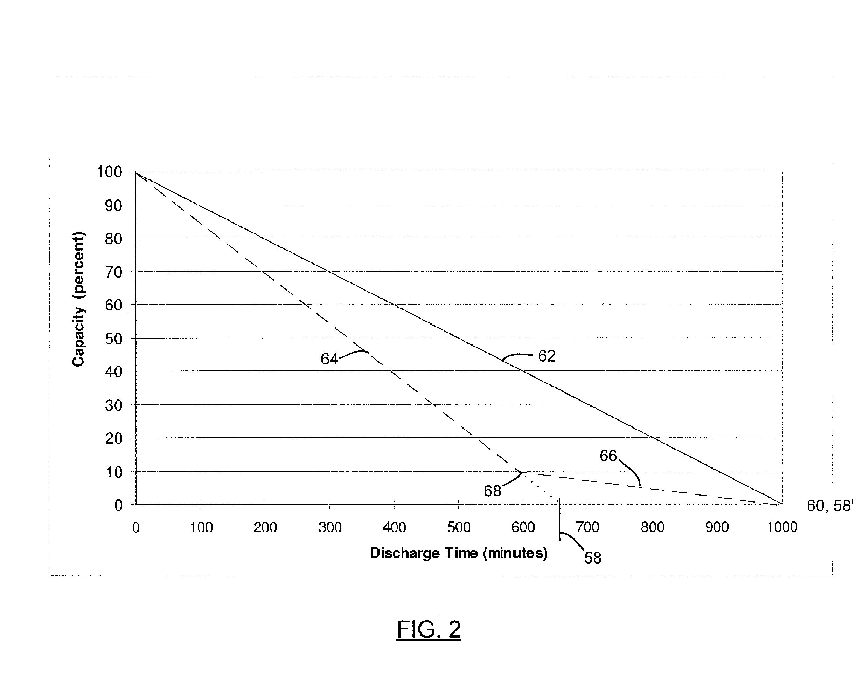

Turning to FIG. 2, a plot is shown illustrating the effect the power supply manager 54 may have in extending the battery life. The plot graphs battery capacity (in percent) on the vertical axis and the estimated discharge time (in minutes) on the horizontal axis. In one example, the manufacturer of the mobile electronic device 10 desires a predetermined discharge time 60 for a fully-charged battery to be 1000 minutes. That is, regardless of the various and changing loads on the battery 50, the mobile electronic device 10 should last 1000 minutes between charges. Under normal usage, e.g., typical loads, a baseline capacity discharge rate 62 may be established. In the illustrated example, the baseline discharge rate 62 is a straight line with a negative slope of 0.10% per minute, but in actual usage the discharge rate may vary within a range centered about the baseline. The baseline capacity discharge rate 62 is expressed in general terms of diminished battery capacity over time; the battery capacity could also be expressed in other, similar terms that relate to the specific characteristics of the chemical cell, such as current draw over time.

In actual usage, many factors affect the longevity of the battery charge. Some factors are well-known and may be compensated for, while others are widely variable and very difficult to predict with certainty. For example, one factor affecting the predetermined discharge time 60 is the age of the battery 50. As a chemical cell ages, the resistance of the electrolyte tends to increase. Aging also causes the surface of the electrodes to deteriorate and the contact resistance builds up and at the same time the effective area of the plates decreases reducing its capacitance. All of these effects increase the internal impedance of the cell adversely affecting its ability to perform. Accordingly, FIG. 2 graphs an aging battery discharge rate 64 that, in one example, is - 0.15% per minute. In other words, an older battery may fully discharge well before the predetermined discharge time 60 if no other action is taken to extend its life.

In one aspect of the invention, the power supply manager 54, with the aide of the microprocessor 12 and associated memory 14 (FIG. 1), dynamically monitors the capacity discharge rate of the battery 50 to determine the forecast discharge time 58. In the illustrated embodiment, the forecast discharge time 58 for the aging battery is approximately 660 minutes. If the forecast discharge time 58 is less than the predetermined discharge time 60, the controller 34 commands the power supply manager 54 to begin drawing power from the fuel cell 52. The additional power drawn from the fuel cell 52 decreases the load on the battery 50, thereby changing the slope of the battery discharge rate curve. The new discharge rate, or slope 66, becomes less negative, which extends the forecast discharge time (e.g., 58'). The power supply manager 54 continues to draw power from the fuel cell 52 until the forecast discharge time 58' is greater than or equal to the predetermined discharge time 60. In this manner, the discharge time of the battery may be guaranteed with relative certainty.

In one embodiment, the fuel cell 52 operates at full capacity and the power draw on the battery 50 is regulated such that the predetermined discharge time 60 is met or exceeded. In another embodiment, the fuel cell 52 operates at variable output and operates in concert with the battery 50 and the power supply manager 54 such that the predetermined discharge time 60 is met or exceeded.

In one embodiment of the invention, the controller 34 does not take action until the power supply manager 54 determines that the capacity of the battery 50 reaches a predetermined limit 68. In one example the predetermined limit 68 is approximately 10% of the battery capacity. The 10% limit may be sufficient when light power usage is common in the mobile electronic device 10 and the power provided by the fuel cell 52 will be adequate to extend the battery's discharge time to the predetermined discharge time 60. In the example illustrated in FIG.2, the capacity of the battery 50 drops to the predetermined limit of 10% before the controller 34 commands the power supply manager 54 to operate the fuel cell 52.

In some embodiments, to save processing power, the dynamic capacity discharge rate 56 of the battery 50 and corresponding forecast discharge time 58 are not even monitored or determined until the battery capacity reaches the predetermined limit 68. For example, the aging battery discharge rate 64 may be inconsequential to the operation of the mobile electronic device 10 until the battery capacity reaches the predetermined limit 68 (e.g., 10%), at which time the controller commands the power supply manager 54 to take action.

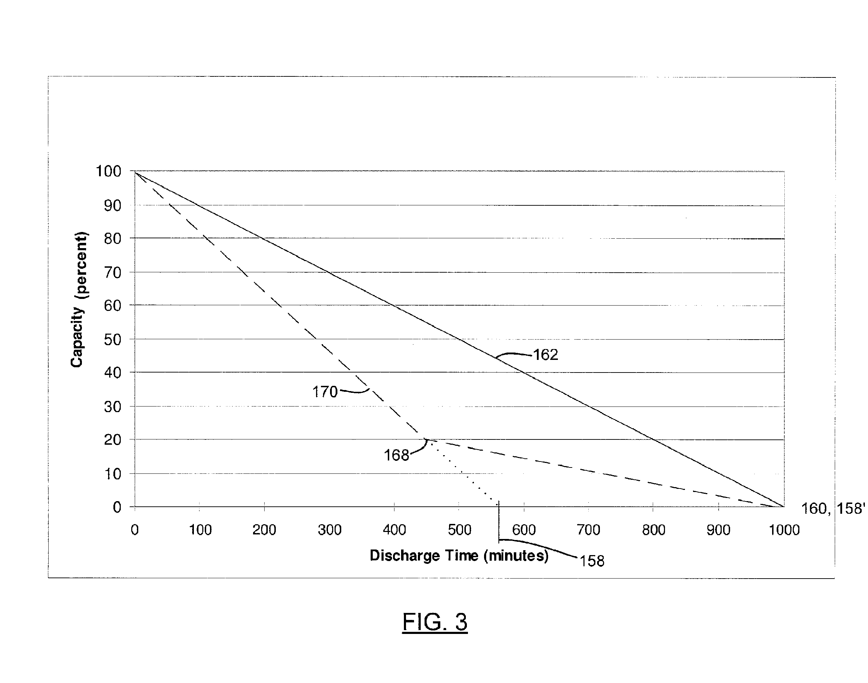

Turning to FIG. 3, wherein like numbers indicate like elements from FIG. 2, the temperature of the battery 50 is shown to be another factor affecting a predetermined discharge time 160. Batteries depend on an electrochemical process for their action and these chemical reactions are dependent on temperature. Traditional chemistry cells are somewhat problematic at low temperatures, in that performance starts to deteriorate as the rate of chemical reaction is reduced. For example, a cold lithium ion battery at 0° C does not deliver the same energy as the exact same lithium ion battery at 22° C. This may be problematic for mobile electronic devices operating in harsh winter climates, such as a PDA being used by parcel delivery service personnel in extremely cold weather. FIG. 3 illustrates a cold battery discharge rate 170 compared to a baseline capacity discharge rate 162 at room temperature. In the example, the cold discharge rate 170 is approximately -0.18 % per minute.

The cold discharge rate 170, as illustrated, would result in a forecast discharge time 158 of approximately 560 minutes, as indicated by the dotted line. Accordingly, the forecast discharge time may be increased to a value 158' greater than or equal to the predetermined discharge time 160 by drawing power from the fuel cell 52. In the disclosed embodiment, the operation of the fuel cell 52 initiates when the battery capacity reaches a predetermined limit 168 of 20%, which may be sufficient when the power usage is generally predictable. In other embodiments, temperature sensors could be utilized to trigger operation of the fuel cell 52 when the reading reached a lower threshold value.

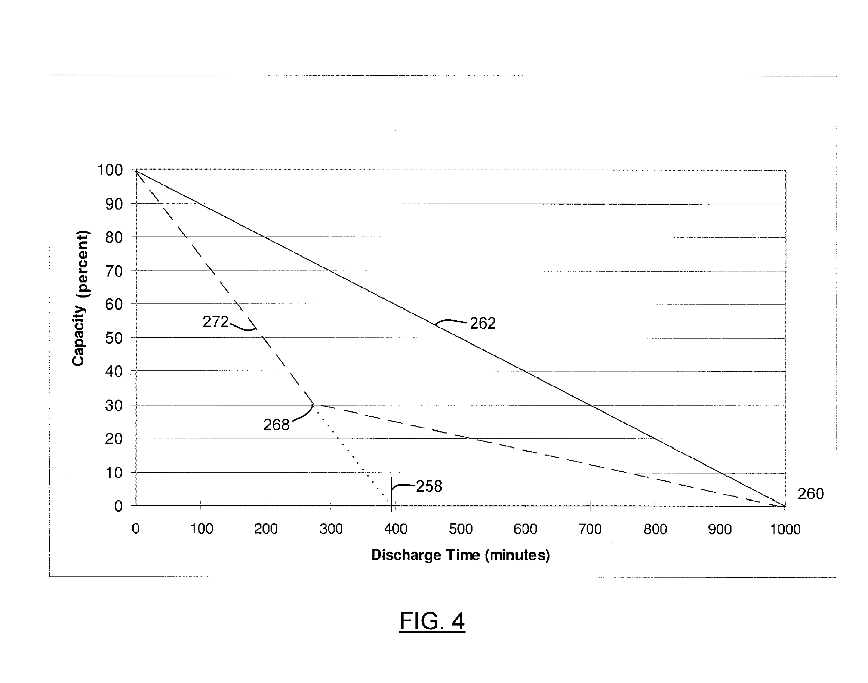

Turning to FIG. 4, wherein like numbers indicate like elements from FIG. 2, the load dependency or current draw on the battery 50 is shown to be another factor affecting a predetermined discharge time 260. The load on the battery in the mobile electronic device 10 may vary widely, especially if the device includes the wireless transceiver 18. For example, the power required for a cellular telephone at any given point in time heavily depends on the coverage and proximity to the cell tower. The power demands are constantly rising and falling. A cell phone operating in an automobile travelling at highway speeds may draw low power communicating with a nearby tower in one time span, but minutes later may draw up to two watts of power to communicate with a tower in a weak coverage area. Therefore, a load dependency discharge rate 272 may have a steep negative slope, such as -0.26% per minute as shown in FIG. 4. The intermittent nature of the power requirements along with the inability to specify loads with certainty have driven designers to oversize the system to meet all possible power scenarios. This solution adds cost, weight, and complexity.

In the disclosed embodiment, the operation of the fuel cell 52 initiates when the battery capacity reaches a predetermined limit 268 of approximately 30% of the battery capacity. The 30% limit may be necessary when heavy or unpredictable power usage is common in the mobile electronic device 10 and the power provided by the fuel cell 52 may be insufficient to extend the battery's discharge time to the predetermined discharge time 60.

As described above, one or more factors affect the longevity of the battery charge. The effects of the various factors may combine in an unpredictable manner, but the disclosed apparatus and method do not necessarily have to distinguish between them. The power supply manager 54 may simply monitor a dynamic capacity discharge rate of the battery 50, determine a forecast discharge time 58, and control the operation of the fuel cell 52 to extend the life of the battery, regardless of the source of the loads.

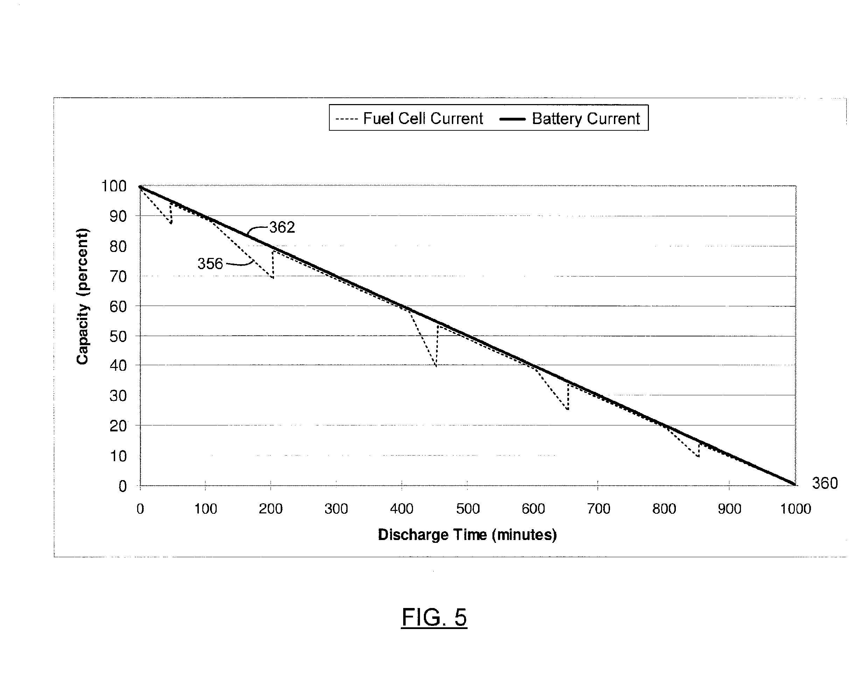

Turning to FIG. 5, wherein like numbers indicate like elements from FIG. 2, a plot is shown describing another embodiment of the invention. In this embodiment, the various loads on the system are shared between the battery 50 and the fuel cell 52, and the maximum rate of current draw from the battery remains approximately constant to define a baseline capacity discharge rate 362. The total current being drawn by the system as a whole (e.g., the dynamic capacity discharge rate 356) is monitored and, if the current exceeds the baseline capacity discharge rate 362, the additional current demand is sourced from the fuel cell 52 so as not to impact the predetermined discharge time 360 of the battery. The dashed line in FIG. 5 indicates the fuel cell current necessary to restore the dynamic capacity discharge rate 356 to the baseline capacity discharge rate 362.

The disclosed mobile electronic device 10 is exemplary in nature and not intended to be limiting. Other embodiments of the device 10 could be used without departing from the scope of this disclosure. For example, the mobile electronic device 10 could be used in mobile telephones, pagers, two-way radios, remote-controlled appliances, models, toys, wireless fidelity ("Wi-Fi") devices, and wireless sensors. Although the mobile electronic device 10 may be described below as being used in (and may be illustrated as containing components of) a mobile telephone, the device could be used in any of these or other devices. Also, the mobile electronic device 10 could use any suitable wireless signals to communicate. Although the mobile electronic device 10 may be described below as using radio frequency (RF) signals to communicate, the device could use any other or additional type(s) of wireless signals.

One of the improvements of the present disclosure is that the manufacturer of the mobile electronic device may now guarantee or certify a time period for battery discharge. Normal design practice resorts to over-design the components in terms of battery storage capability to assure the discharge time is met, which adds cost and weight. In contrast, the method and arrangement of components described herein allow the mobile device to meet the intended battery life without resorting to additional capacity and weight, which will further allow miniaturization.

One advantage of the disclosed mobile device and method is that the power consumption is not dependant upon specific tasks undertaken by the device, but rather by assessing the system as a whole and dynamically compensating when required.

Among the apparatus and methods set forth herein there is set forth herein:
A1. A mobile electronic device comprising:
   a microprocessor coupled to a system bus;
   a wireless transceiver coupled to the system bus;
   a power supply manager coupled to the system bus, the power supply manager configured to operate the mobile device for a predetermined discharge time, the power supply manager coupled to a battery for supplying primary power to the mobile electronic device and a fuel cell for supplying auxiliary power, the power supply manager operable to monitor a dynamic capacity discharge rate, wherein the dynamic capacity discharge rate deviates from a baseline capacity discharge rate due to one or more factors; and
   a controller coupled to the system bus, the controller configured to operate the fuel cell responsive to the deviation of the dynamic capacity discharge rate from the baseline capacity discharge rate to restore the predetermined discharge time.
A2. The mobile electronic device of A1, wherein the dynamic capacity discharge rate is defined by electrical current over time.
A3. The mobile electronic device of A2, wherein the fuel cell provides auxiliary power such that the dynamic capacity discharge rate meets the baseline capacity discharge rate.
A4. The mobile electronic device of A1, wherein the dynamic capacity discharge rate is defined by battery capacity over time.
A5. The mobile electronic device of A1, wherein the fuel cell provides auxiliary power such that the dynamic capacity discharge rate meets the predetermined discharge time.
A6. The mobile electronic device of A1, wherein the one or more factors includes the temperature of the battery.
A7. The mobile electronic device of A1, wherein the one or more factors includes the age of the battery.
A8. The mobile electronic device of A1, wherein the one or more factors includes the load dependency of the battery.
B 1. A method for achieving a predetermined discharge time for a mobile electronic device, comprising the steps of:
   providing a battery for supplying primary power to the mobile electronic device, and a fuel cell for supplying auxiliary power to the mobile electronic device;
   monitoring a dynamic capacity discharge rate of the mobile electronic device, the dynamic capacity discharge rate being responsive to one or more factors;
   determining a forecast discharge time in response to the dynamic capacity discharge rate;
   comparing the forecast discharge time to the predetermined discharge time and, if the forecast discharge time is less than the predetermined discharge time, drawing power from the fuel cell until the dynamic capacity discharge rate results in the forecast discharge time being greater than or equal to the predetermined discharge time.
B2. The method of B1, further comprising the step of establishing a baseline capacity discharge rate to achieve the predetermined discharge time.
B3. The method of B1, wherein the one or more factors is the age of the battery.
B4. The method of B1, wherein the one or more factors is the temperature of the battery.
B5. The method of B1, wherein the one or more factors is the load dependency on the battery.
B6. The method of B1, wherein the step of drawing power from the fuel cell is initiated when the capacity of the battery reaches a predetermined limit.
B7. The method of B6, wherein the predetermined limit is between ten percent and thirty percent of the capacity of the battery.
B8. The method of B1, wherein the step of drawing power from the fuel cell is initiated when the dynamic capacity discharge rate is less than the baseline capacity discharge rate by a predetermined value.
B9. The method of B8, wherein the predetermined value is at least five percent of the baseline capacity discharge rate.
B10. The method of B9, wherein the predetermined value is between five percent and twenty percent of the baseline capacity discharge rate.
C1. A method for achieving a predetermined discharge time for a mobile electronic device, comprising the steps of:
   providing a battery for supplying primary power to the mobile electronic device, and a fuel cell for supplying auxiliary power to the mobile electronic device;
   establishing a baseline capacity discharge rate to achieve the predetermined discharge time;
   monitoring a dynamic capacity discharge rate of the mobile electronic device, the dynamic capacity discharge rate being responsive to one or more factors;
   comparing the dynamic capacity discharge rate to the baseline capacity discharge rate and, if the dynamic capacity discharge rate differs from the baseline capacity discharge rate, drawing power from the fuel cell to make up the difference.
C2. The method of C1, wherein the dynamic capacity discharge rate exceeds the baseline capacity discharge rate.

While the present invention has been described with reference to a number of specific embodiments, it will be understood that the true spirit and scope of the invention should be determined only with respect to claims that can be supported by the present specification. Further, while in numerous cases herein wherein systems and apparatuses and methods are described as having a certain number of elements it will be understood that such systems, apparatuses and methods can be practiced with fewer than the mentioned certain number of elements. Also, while a number of particular embodiments have been described, it will be understood that features and aspects that have been described with reference to each particular embodiment can be used with each remaining particularly described embodiment.

## Claims

1. A mobile electronic device comprising:
a microprocessor coupled to a system bus;
a wireless transceiver coupled to the system bus;
a power supply manager coupled to the system bus, the power supply manager configured to operate the mobile device for a predetermined discharge time, the power supply manager coupled to a battery for supplying primary power to the mobile electronic device and a fuel cell for supplying auxiliary power, the power supply manager operable to monitor a dynamic capacity discharge rate, wherein the dynamic capacity discharge rate deviates from a baseline capacity discharge rate due to one or more factors; and
a controller coupled to the system bus, the controller configured to operate the fuel cell responsive to the deviation of the dynamic capacity discharge rate from the baseline capacity discharge rate to restore the predetermined discharge time.

2. The mobile electronic device of claim 1, wherein the dynamic capacity discharge rate is defined by electrical current over time.

3. The mobile electronic device of claim 1, wherein the dynamic capacity discharge rate is defined by battery capacity over time.

4. The mobile electronic device of claim 1, wherein the fuel cell provides auxiliary power such that the dynamic capacity discharge rate meets the predetermined discharge time.

5. The mobile electronic device of claim 1, wherein the one or more factors includes the temperature of the battery.

6. The mobile electronic device of claim 1, wherein the one or more factors includes the age of the battery.

7. The mobile electronic device of claim 1, wherein the one or more factors includes the load dependency of the battery.

8. A method for achieving a predetermined discharge time for a mobile electronic device, comprising the steps of:
providing a battery for supplying primary power to the mobile electronic device, and a fuel cell for supplying auxiliary power to the mobile electronic device;
monitoring a dynamic capacity discharge rate of the mobile electronic device, the dynamic capacity discharge rate being responsive to one or more factors;
determining a forecast discharge time in response to the dynamic capacity discharge rate;
comparing the forecast discharge time to the predetermined discharge time and, if the forecast discharge time is less than the predetermined discharge time, drawing power from the fuel cell until the dynamic capacity discharge rate results in the forecast discharge time being greater than or equal to the predetermined discharge time.

9. The method of claim 8, further comprising the step of establishing a baseline capacity discharge rate to achieve the predetermined discharge time.

10. The method of claim 8, wherein the one or more factors is the age of the battery.

11. The method of claim 8, wherein the one or more factors is the temperature of the battery.

12. The method of claim 8, wherein the one or more factors is the load dependency on the battery.

13. The method of claim 8, wherein the step of drawing power from the fuel cell is initiated when the capacity of the battery reaches a predetermined limit.

14. The method of claim 8, wherein the step of drawing power from the fuel cell is initiated when the dynamic capacity discharge rate is less than the baseline capacity discharge rate by a predetermined value.

15. A method for achieving a predetermined discharge time for a mobile electronic device, comprising the steps of:
providing a battery for supplying primary power to the mobile electronic device, and a fuel cell for supplying auxiliary power to the mobile electronic device;
establishing a baseline capacity discharge rate to achieve the predetermined discharge time;
monitoring a dynamic capacity discharge rate of the mobile electronic device, the dynamic capacity discharge rate being responsive to one or more factors;
comparing the dynamic capacity discharge rate to the baseline capacity discharge rate and, if the dynamic capacity discharge rate differs from the baseline capacity discharge rate, drawing power from the fuel cell to make up the difference.
